# EUROPEAN PATENT APPLICATION

(11) **EP 3 118 802 A1**
(43) Date of publication of application: **18.01.2017**
(21) Application number: 16179729.5
(22) Date of filing: 15.07.2016
(51) Int. Cl.: G06Q 30/02

(54) **ELECTRONIC RECEIPT SYSTEM, SERVER DEVICE, AND PROGRAM**

(30) Priority: 17.07.2015 JP 2015143451
(71) Applicant: Toshiba TEC Kabushiki Kaisha, Tokyo 141-0032 (JP)
(72) Inventor: MURAKAMI, Tomotaka, Shinagawa-ku, Tokyo 141-8562 (JP); YOSHIMURA, Makoto, Shinagawa-ku, Tokyo 141-8562 (JP)
(74) Representative: Takeuchi, Maya

(57) **Abstract**

A server for use in an electronic coupon management system includes a processor, a storage device, and a communication interface. The server stores a plurality of electronic coupons, each electronic coupon including attribute information corresponding to target customer attributes. The server also stores a plurality of customer identification records, each customer identification record including an identification of a customer and attribute information of the customer. The server identifies, for each electronic coupon, a group of customers for which the corresponding attribute information matches the attribute information in the corresponding electronic coupon. The server receives a request for one or more coupons. The server transmits to the user terminal, in response to the request, one or more of the electronic coupons for which the attribute information stored in the customer identification record corresponding to the customer identification in the request matches the attribute information in the corresponding electronic coupon.

## Description

### FIELD

Embodiments described herein relate generally to an electronic receipt system capable of distributing electronic coupon information, a server device of the system, and a program causing a computer to function as the server device.

### BACKGROUND

In a known electronic receipt system, electronic receipt information is generated when a payment transaction (activity related to selling merchandise to the customer) is settled. The electronic receipt information is distributed to an information terminal used by the customer via a network such as the Internet. Also, in a known electronic coupon system, a manufacturer or a vendor of the merchandise distributes electronic coupon information to the information terminal used by the customer via a communication network.

In the store that introduces the electronic receipt system, as the number of customers who receive receipts as electronic receipt information is increased, the consumption of receipt sheets is reduced. Thus, the number of troublesome operations such as exchanging receipt paper or responding to paper jamming is reduced. Thus, in order to increase the benefit of the electronic receipt system, it is considered that the electronic coupon information is distributed to the information terminal of the customer separately from the electronic receipt data.

### DESCRIPTION OF THE DRAWINGS

FIG. 1 illustrates an example configuration of an electronic receipt system.
FIG. 2 is a block diagram showing an example configuration of an information terminal.
FIG. 3 is a block diagram showing an example configuration of a POS terminal.
FIG. 4 is a block diagram showing an example configuration of an electronic receipt server.
FIG. 5 is a block diagram showing an example configuration of a center server.
FIG. 6 is a schematic diagram showing the structure of an electronic receipt record stored in a receipt file.
FIG. 7 is a schematic diagram showing the structure of a member record stored in a member file.
FIG. 8 is a schematic diagram showing the structure of a coupon record stored in a coupon file.
FIG. 9 is a schematic diagram showing the structure of a distribution management record stored in a distribution management file.
FIG. 10 is a flowchart showing an example sequence of operations of an update processing procedure performed by a processor of a center server.
FIG. 11 is a flowchart showing an example sequence of operations of a coupon check processing procedure performed by a processor of the information terminal.
FIG. 12 is a schematic diagram showing an example of a top screen displayed on a touch panel of the information terminal.
FIG. 13 is a schematic diagram showing an example of a couponless notification screen displayed on the touch panel of the information terminal.
FIG. 14 is a schematic diagram showing an example of a coupon list screen displayed on the touch panel of the information terminal.
FIG. 15 is a schematic diagram showing an example of a coupon usage screen displayed on the touch panel of the information terminal.
FIG. 16 is a flowchart showing an example sequence of operations of a coupon request command reception processing procedure performed by a processor of the center server.
FIG. 17 is a flowchart showing an example sequence of operations of a scan processing procedure performed by a processor of the POS terminal.
FIG. 18 is a flowchart that shows an example sequence of operations of a coupon determination processing.
FIG. 19 is a flowchart showing an example sequence of operations of a settlement key processing procedure performed by the processor of the POS terminal.
FIG. 20 is a flowchart showing an example sequence of operations of a receipt data reception processing procedure performed by the processor of the center server.

### DETAILED DESCRIPTION

The present invention is related to an electronic coupon management system including a POS system , a server system , and a network which connects both the systems and such that these systems can communicate with each other.
The server for use in an electronic coupon management system includes a processor, a storage device, and a communication interface. The server stores a plurality of electronic coupons, each electronic coupon corresponding to a coupon that can be used in a transaction, and including attribute information corresponding to target customer attributes. The server also stores a plurality of customer identification records, each customer identification record including an identification of a customer and attribute information of the customer. The server identifies, for each electronic coupon, a group of one or more customers for which the corresponding attribute information matches the attribute information in the corresponding electronic coupon. The server receives, from a user terminal, a request for one or more coupons, the request including customer identification of the user of the user terminal. The server transmits to the user terminal, in response to the request, one or more of the electronic coupons for which the attribute information stored in the customer identification record corresponding to the customer identification in the request matches the attribute information in the corresponding electronic coupon.

Preferably, the processor is further configured to control the storage device and the communication interface to perform the following function: store a plurality of coupon usage records, each coupon usage record including the customer identification information corresponding to a customer who used the corresponding coupon in a transaction at least one time, and a total number of times the coupon has been used by the customer.

Preferably, one or more of the electronic coupons is not transmitted to the user terminal in response to the request when the total number of times the corresponding coupon has been used by the user exceeds the permitted number of times of usage.

Preferably, the processor is further configured to control the storage device and the communication interface to transmit, to the user terminal, GUI instructions that cause the user terminal to display a list of coupons that can be used in the transaction.

Preferably, the list of coupons that can be used in the transaction is based on the target customer attributes of each electronic coupon compared to the attribute information of each customer identification record.

Preferably, the GUI instructions cause the user terminal to: display the list of coupons including an interface that allows the user terminal to accept a user input selecting an electronic coupon from the list, and in response to the accepted user input, display a code that can be scanned to apply the selected electronic coupon to the transaction.

Preferably, the processor is further configured to control the storage device and the communication interface to: store, in at least one of the plurality of electronic coupons, an end date of the electronic coupon; and if a current date is the same as or later than the end date, delete the corresponding electronic coupon.

The present invention also relates to an electronic coupon managing method comprising the steps of: storing a plurality of electronic coupons, each electronic coupon corresponding to a coupon that can be used in a transaction, and including attribute information corresponding to target customer attributes; storing a plurality of customer identification records, each customer identification record including an identification of a customer and attribute information of the customer; identifying, for each electronic coupon, a group of one or more customers for which the corresponding attribute information matches the attribute information in the corresponding electronic coupon; receiving from a user terminal a request for one or more coupons, the request including customer identification of the user of the user terminal; and transmitting to the user terminal, in response to the request, one or more of the electronic coupons for which the attribute information stored in the customer identification record corresponding to the customer identification in the request matches the attribute information in the corresponding electronic coupon.

Preferably, the method further comprises the step of: storing a plurality of coupon usage records, each coupon usage record including the customer identification corresponding to a customer who used the corresponding coupon in a transaction at least one time, and a total number of times the coupon has been used by the customer.

Preferably, one or more of the electronic coupons are not transmitted to the user terminal in response to the request when the total number of times the corresponding coupon has been used by the user exceeds the permitted number of times of usage.

The method may further comprise the step of: transmitting, to the user terminal, GUI instructions that cause the user terminal to display a list of coupons that can be used in the transaction.

Preferably, the list of coupons that can be used in the transaction is based on the target customer attributes of each electronic coupon compared to the attribute information of each customer identification record.
Preferably, the GUI instructions further cause the user terminal to perform the steps of: displaying the list in an interface that allows the user terminal to accept a user input selecting an electronic coupon from the list; and in response to the accepted user input, displaying a code that can be scanned to apply the selected electronic coupon to the transaction.

The method may further comprise the steps of: storing, in at least one of the plurality of electronic coupons, an end date of the electronic coupon; and if a current date is the same as or later than the end date, deleting the corresponding electronic coupon.

The present invention further relates to a non-transitory computer readable storage medium containing instructions that cause a server to perform an electronic coupon managing method comprising the steps of: storing a plurality of electronic coupons, each electronic coupon corresponding to a coupon that can be used in a transaction, and including attribute information corresponding to target customer attributes; storing a plurality of customer identification records, each customer identification record including an identification of a customer and attribute information of the customer; identifying, for each electronic coupon, a group of one or more customers for which the corresponding attribute information matches the attribute information in the corresponding electronic coupon; receiving from a user terminal a request for one or more coupons, the request including customer identification of the user of the user terminal; and transmitting to the user terminal, in response to the request, one or more of the electronic coupons for which the attribute information stored in the customer identification record corresponding to the customer identification in the request matches the attribute information in the corresponding electronic coupon.

Preferably, the instructions further cause the server to perform the step of: storing a plurality of coupon usage records, each coupon usage record including the customer identification corresponding to a customer who used the corresponding coupon in a transaction at least one time, and a total number of times the coupon has been used by the customer.

Preferably, the instructions further cause one or more of the electronic coupons to not be transmitted to the user terminal in response to the request when the total number of times the corresponding coupon has been used by the user exceeds the permitted number of times of usage.

Preferably, the instructions further cause the server to perform the step of: transmitting, to the user terminal, GUI instructions that cause the user terminal to display a list of coupons that can be used in the transaction.

Preferably, the list of coupons that can be used in the transaction is based on the target customer attributes of each electronic coupon compared to the attribute information of each customer identification record.

Preferably, the GUI instructions further cause the user terminal to perform the steps of: displaying the list in an interface that allows the user terminal to accept a user input selecting an electronic coupon from the list; and in response to the accepted user input, displaying a code that can be scanned to apply the selected electronic coupon to the transaction.

Preferably, the instructions further cause the server to perform the steps of: storing, in at least one of the plurality of electronic coupons, an end date of the electronic coupon; and if a current date is the same as or later than the end date, deleting the corresponding electronic coupon.

Hereinafter, an embodiment of an electronic receipt system capable of grouping customers who receive receipts as electronic receipt information and distributing electronic coupon information on a group basis, and a server device of this system will be described as non-limiting examples, with reference to the drawings.

### Configuration of Electronic Receipt System

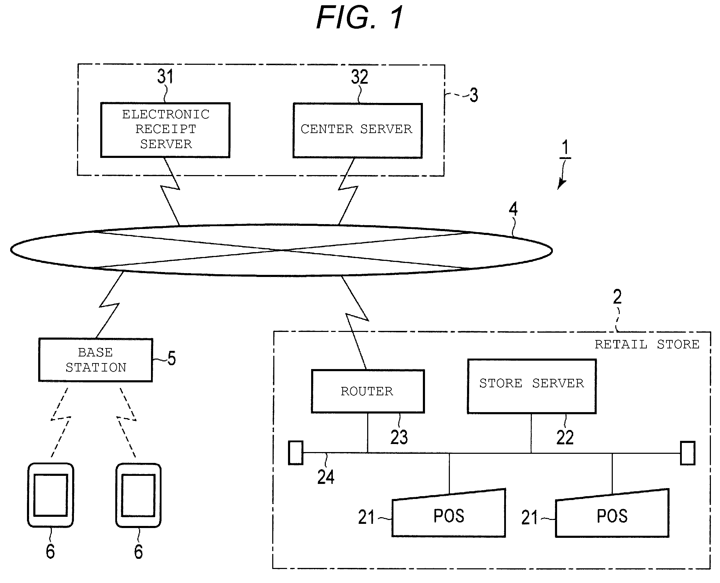

FIG. 1 illustrates an example configuration of an electronic receipt system 1 according to the present embodiment.

The electronic receipt system 1 includes a POS system 2, a server system 3, and a network 4 which connects both the systems 2 and 3 such that these systems can communicate with each other. The network 4 is a wide area communication network such as the Internet or a virtual private network (VPN). The electronic receipt system 1 is connected to information terminals 6 using wireless communication through a base station 5 over the network 4. The information terminal 6 is, for example, a wireless communication device hand-held by the customer. The information terminal 6 may be a personal computer, a smartphone, a portable phone, or a tablet terminal.

The POS system 2 includes a plurality (two in the drawing) of POS terminals 21, a store server 22, a router 23, and a local area network (LAN) 24. The POS system 2 is configured such that the respective POS terminals 21, the store server 22 and the router 23 are connected to the LAN 24. The LAN 24 may be a wired LAN, or may be a wireless LAN. The POS system 2 is provided in a retail store which sells merchandise.

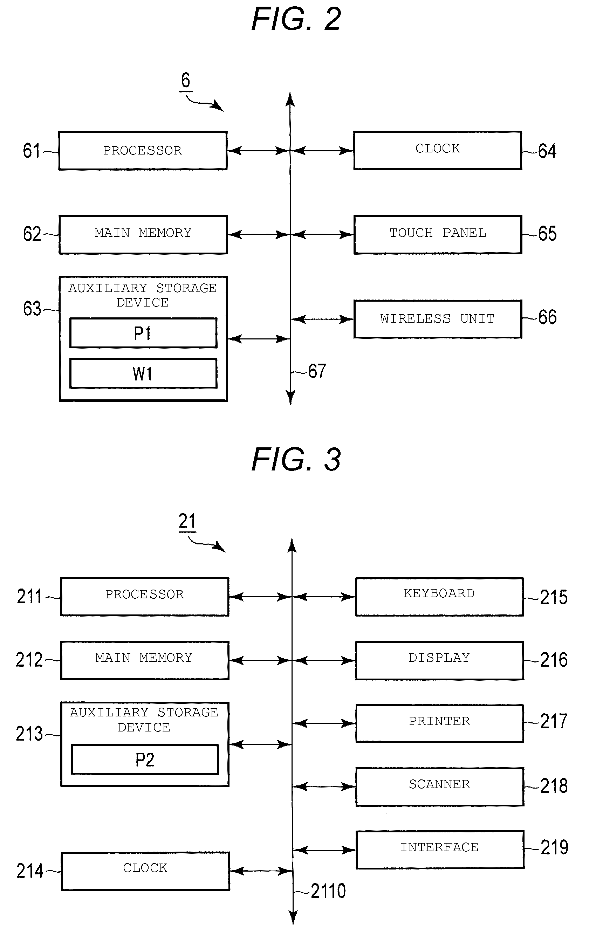

The POS terminal 21 performs registration processing on sales data of merchandise purchased by the customer, and settles a payment transaction with the customer. The POS terminal 21 creates receipt data indicating the details of the payment transaction when the payment transaction is settled, and issues a receipt. The receipt may be issued as a paper receipt, or may be issued as an electronic receipt. When the receipt is issued as the paper receipt, the POS terminal 21 controls a printer 217 (see FIG. 3) to print the receipt data on a receipt sheet. When the receipt is issued as an electronic receipt, the POS terminal 21 transmits a membership ID, which is customer identification information received by a reading device, and the digitized receipt data to the server system 3.

The store server 22 includes a merchandise master file which stores information regarding each type of merchandise sold in the store. The information includes a merchandise ID which is information for identifying merchandise. A name (merchandise name) of the merchandise identified by the merchandise ID, price (unit price) per one merchandise item, and a classification code indicating merchandise classification are also stored in the merchandise master file. The classification code is, for example, a code for identifying a classification of the merchandise as foodstuff or general merchandise. When an inquiry about the merchandise ID is received from the POS terminal 21 via the LAN 24, the store server 22 transmits merchandise information such as the merchandise name, unit prices and classification code including the merchandise ID to the requesting POS terminal 21 as a response.

The router 23 relays data communication between the LAN 24 and the network 4. The electronic receipt information (digitized receipt data) is transmitted to the server system 3 from the POS terminal 21 via the LAN 24 and the network 4 through the router 23.

Although the POS system 2 of one store is shown in FIG. 1, the POS systems 2 of a plurality of stores are typically connected to the network 4 and the server system 3, and maybe included in the electronic receipt system 1.

The server system 3 includes an electronic receipt server 31, and a center server 32. The electronic receipt server 31 collectively stores the electronic receipt information that is issued to the respective customers. The electronic receipt server 31 includes a storage device which stores the electronic receipt information received via the network 4. When a request is received from the information terminal 6, the electronic receipt server 31 reads the electronic receipt information issued to the customer who is a user of the information terminal 6 from the storage device, and transmits the read electronic receipt information to the information terminal 6 via the network 4.

The center server 32 collectively stores digitalized coupon data items, that is, electronic coupon information. The center server 32 includes a storage device which stores the electronic coupon information input from an external device. The external device may be, for example, a computer device connected to the network 4, or may be, for example, a reading device which reads data from a recording medium such as a magnetic disk, an optical disk, a USB memory, or a semiconductor memory. When a request is received from the information terminal 6, the center server 32 reads, from the storage device, the electronic coupon information corresponding to the customer who is the user of the information terminal 6 , and transmits the read electronic coupon information to the information terminal 6 via the network 4.

### Configuration of Information Terminal

FIG. 2 is a block diagram showing an example configuration of the information terminal 6.

The information terminal 6 includes a processor 61, a main memory 62, an auxiliary storage device 63, a clock 64, a touch panel 65, and a wireless unit 66 in a portable main body. The processor 61, the main memory 62, the auxiliary storage device 63, the clock 64, the touch panel 65 and the wireless unit 66 are connected by a system transmission path 67 including an address bus, a data bus and a control signal line.

The information terminal 6, the processor 61, the main memory 62, the auxiliary storage device 63, and the system transmission path 67 that connects these components may be provided as a computer.

The processor 61 corresponds to the main processor of the computer. The processor 61 controls the respective units for realizing various functions of the information terminal 6 according to an operating system and/or an application program.

The main memory 62 corresponds to a main storage unit of the computer. The main memory 62 includes a non-volatile memory area, and a volatile memory area. The main memory 62 stores the operating system or the application program in the non-volatile memory area. The main memory 62 may store data necessary for the processor 61 to execute processing for controlling the respective units in the non-volatile memory area. The main memory 62 uses the volatile memory area as a work area in which data is appropriately rewritten by the processor 61.

The auxiliary storage device 63 corresponds to an auxiliary storage unit of the computer. For example, an electric erasable programmable read-only memory (EEPROM) may be used as the auxiliary storage device 63. A hard disk drive (HDD) or a solid state drive (SSD) may also be used as the auxiliary storage device 63. The auxiliary storage device 63 stores data used by the processor 61 to perform various processing or data generated by the processing in the processor 61. The auxiliary storage device 63 may store the application program.

The clock 64 functions as a time information source of the information terminal 6. The processor 61 determines a current date and time based on the time information clocked by the clock 64.

The touch panel 65 functions as an input device and a display device of the information terminal 6. An icon for starting the application program is displayed on the touch panel 65.

The wireless unit 66 performs wireless data communication with the base station 5 by using the wireless LAN or mobile data communication.

The information terminal 6 having such a configuration is a user terminal for the electronic receipt system 1 and is capable of distributing the electronic coupon information by in accordance with an electronic receipt terminal program P1 which is an application program. That is, the information terminal 6 may receive the electronic receipt information distributed from the electronic receipt server 31 through the wireless unit 66, and may display a receipt image on the touch panel 65. The information terminal 6 may also receive the electronic coupon information distributed from the center server 32 through the wireless unit 66, and may display a coupon list on the touch panel 65.

The electronic receipt terminal program P1 controls the processor 61 such that the information terminal 6 functions as a user terminal for the electronic receipt system 1 capable of distributing the electronic coupon information. The electronic receipt terminal program P1 is stored in the auxiliary storage device 63. An electronic receipt management area W1 together with the electronic receipt terminal program P1 is formed in the auxiliary storage device 63.

The user of the information terminal 6 needs to perform membership registration in advance in order to receive the receipt as the electronic receipt information from the retail store. The membership registration may be performed in the information terminal 6 by controlling the electronic receipt terminal program P1. Accordingly, the user needs to install the electronic receipt terminal program P1 in the information terminal 6 before the membership registration.

If the user starts the electronic receipt terminal program P1 and selects a membership registration mode in the information terminal 6 in which the electronic receipt terminal program P1 is installed, a membership registration screen is displayed on the touch panel 65. The user inputs user information such as a name, age, gender, and a zip code, and conducts the membership registration. Through the membership registration, a membership ID for identifying the user is issued from the server system 3. The membership ID is stored in the electronic receipt management area W1 of the information terminal 6. Hereinafter, the user who conducts the membership registration is referred to as a member.

### Configuration of POS Terminal

FIG. 3 is a block diagram showing an example configuration of the POS terminal 21.

The POS terminal 21 includes a processor 211, a main memory 212, an auxiliary storage device 213, a clock 214, a keyboard 215, a display 216, a printer 217, a scanner 218, and a communication interface 219. The processor 211, the main memory 212, the auxiliary storage device 213, the clock 214, the keyboard 215, the display 216, the printer 217, the scanner 218 and the communication interface 219 are connected by a system transmission path 2110.

The processor 211, the main memory 212, the auxiliary storage device 213 and the clock 214 of the POS terminal 21 are the similar to the corresponding components of the information terminal 6.

The keyboard 215 is a dedicated input device that includes various function keys such as a multiplication key, a subtotal key and a settlement key. The keyboard 215 also includes numeric keys for typing numbers such as the number of merchandise items and the amount of money. A function necessary for the POS terminal 21 may be assigned to an arbitrary key of a general-purpose keyboard. The settlement key is a key for allowing an operator to confirm settlement of the payment transaction.

The display 216 is a display device which displays the merchandise name, the price, the total amount of money and the change amount registered in the POS terminal 21. As the display 216, there may be two types of displays, each one for a salesperson and a customer who operate the POS terminal 21. A touch panel for both the input device and the display device may be used, instead of the keyboard 215 and the display 216.

The printer 217 prints the receipt data indicating the details of the payment transaction on a receipt sheet. The receipt sheet on which the receipt data is printed is cut by a cutter, and is issued as a paper receipt.

The scanner 218 optically reads a code symbol such as a barcode or a two-dimensional data code. Merchandise items are typically assigned barcodes representing merchandise codes specific for the corresponding merchandise items. The scanner 218 reads the code symbol assigned to the merchandise purchased by the customer. Also, a code symbol representing the membership ID as a barcode is displayed on the touch panel 65 of the information terminal 6 in which the electronic receipt terminal program P1 is installed. The scanner 218 reads the code symbol displayed on the touch panel 65. That is, the scanner 218 functions as a reading device that acquires the membership ID.

The reading device of the membership ID is not limited to the scanner 218. For example, the information terminal 6 may utilize near field wireless communication, and when the information terminal 6 transmits the membership ID using the near field wireless communication, a near field wireless communication device which receives the membership ID functions as the reading device.

The communication interface 219 is connected to the LAN 24. The communication interface 219 performs data communication with a device connected through the LAN 24 according to a predetermined communication protocol.

The POS terminal 21 having such a configuration functions as an accounting device of the electronic receipt system 1 capable of distributing the electronic coupon information by in accordance with an electronic receipt issuing program P2 which is an application program. The POS terminal 21 can issue the receipt generated in the payment transaction with the member, as the electronic receipt. The POS terminal 21 can perform discount processing in accordance with the electronic coupon information presented from the member. As the discount processing, there may be a discount on a merchandise basis or a discount on the subtotal, for example. The discount processing may be a discount in which the amount of money is discounted at a predetermined percentage, or a discount using a coupon in which the price of the merchandise is changed to an amount of money lower than the usual price.

The electronic receipt issuing program P2 controls the processor 211 such that the POS terminal 21 functions as the accounting device of the electronic receipt system 1 capable of distributing the electronic coupon information. The electronic receipt issuing program P2 is stored in the auxiliary storage device 213.

### Configuration of Electronic Receipt Server

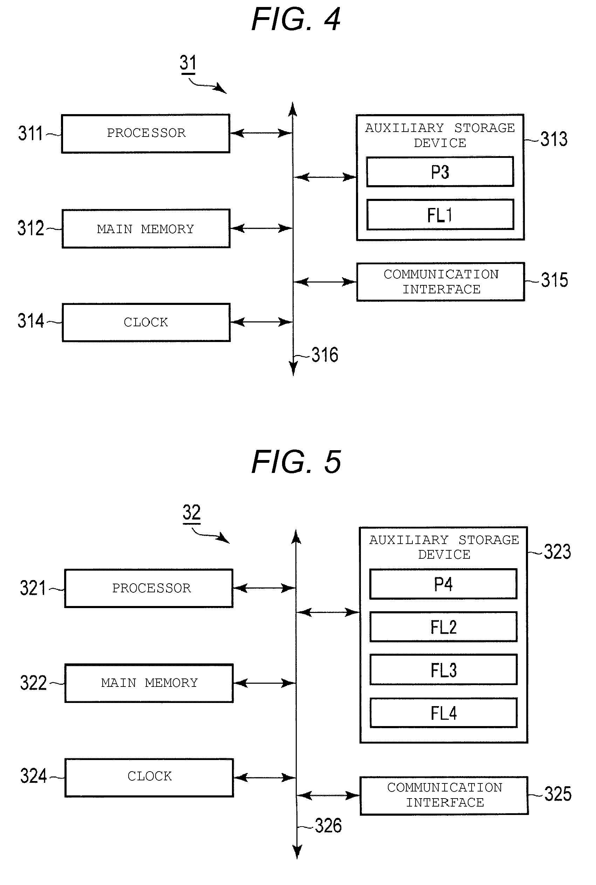

FIG. 4 is a block diagram showing an example configuration of the electronic receipt server 31.

The electronic receipt server 31 includes a processor 311, a main memory 312, an auxiliary storage device 313, a clock 314, and a communication interface 315. The processor 311, the main memory 312, the auxiliary storage device 313, the clock 314 and the communication interface 315 are connected by a system transmission path 316.

The processor 311, the main memory 312, the auxiliary storage device 313 and the clock 314 of the electronic receipt server 31 are similar to the corresponding components of the information terminal 6 and the POS terminal 21.

The communication interface 315 is connected to the network 4. The communication interface 315 performs data communication with a device connected via the network 4 according to a predetermined communication protocol.

The electronic receipt server 31 having such a configuration functions as a server device of the electronic receipt system 1 capable of distributing the electronic coupon information in accordance with an electronic receipt server program P3 which is an application program. That is, the electronic receipt server 31 collectively stores the electronic receipt information issued from the respective POS terminals 21. The electronic receipt server 31 transmits the corresponding electronic receipt information to the information terminal 6 in response to a request from the information terminal 6.

The electronic receipt server program P3 controls the processor 311 such that the electronic receipt server 31 functions as the server device of the electronic receipt system 1 capable of distributing the electronic coupon information. The electronic receipt server program P3 is stored in the auxiliary storage device 313. A receipt file FL1 is also stored in the auxiliary storage device 313. The receipt file FL1 is used as an area where the electronic receipt information is collectively stored.

### Configuration of Center Server

FIG. 5 is a block diagram showing an example configuration of the center server 32.

The center server 32 includes a processor 321, a main memory 322, an auxiliary storage device 323, a clock 324, and a communication interface 325. The processor 321, the main memory 322, the auxiliary storage device 323, the clock 324 and the communication interface 325 are connected by a system transmission path 326.

The processor 321, the main memory 322, the auxiliary storage device 323, the clock 324 and the communication interface 325 of the center server 32 are similar to the corresponding components of the electronic receipt server 31.

The center server 32 having such a configuration functions as a server device of the electronic receipt system 1 capable of distributing the electronic coupon information by in accordance with an electronic coupon management program P4 which is an application program. That is, the center server 32 collectively stores electronic coupon information provided by a manufacturer of the merchandise. The center server 32 transmits the electronic coupon information to a group to which the member belongs in response to a request from the information terminal 6. In other words, the center server 32 transmits the electronic coupon information to the information terminal 6 that corresponds to each member of the group.

The electronic coupon management program P4 controls the processor 321 such that the center server 32 functions as a server device of the electronic receipt system 1 capable of distributing the electronic coupon information. The electronic coupon management program P4 is stored in the auxiliary storage device 323. A member file FL2, a coupon file FL3, and a distribution management file FL4 is also stored in the auxiliary storage device 323. The member file FL2 is used as an area where information regarding the members is collectively stored. The coupon file FL3 is used as an area where the electronic coupon information is collectively stored. The distribution management file FL4 is used as an area where information for managing the distribution of the electronic coupon information is stored for each electronic coupon information.

### Configurations of Respective Files

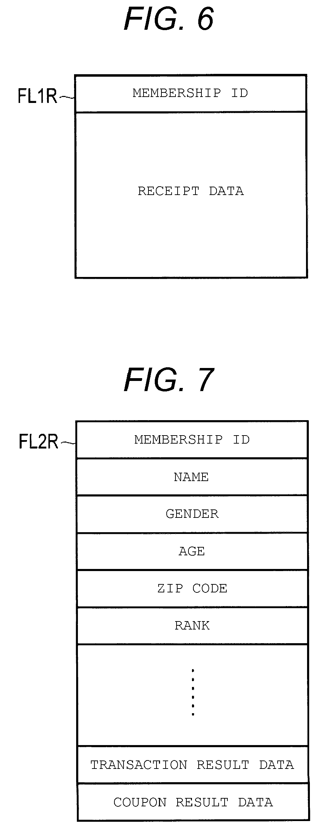

FIG. 6 is a schematic diagram showing the structure of an electronic receipt record FL1R stored in the receipt file FL1. The electronic receipt record FL1R includes a membership ID, and receipt data issued to the member identified by the membership ID.

The receipt data includes a store code, a transaction date and time, merchandise sales data, usage coupon data, and settlement data, for example. The store code is a unique code assigned to each store for identifying the retail store. The merchandise sales data includes a merchandise ID code of the merchandise purchased by the member, a merchandise name, unit price, a sales number, and the sales amount of money. The usage coupon data includes a coupon ID of the electronic coupon information used by the member, and the discount amount of money. The settlement data includes the amount of money of the payment transaction paid by the member, and a payment classification.

Here, the receipt file FL1 is a first storage unit that stores the electronic receipt information indicating the details of the transaction in association with customer identification information (membership ID) for identifying the customer who is a target of the transaction.

FIG. 7 is a schematic diagram showing the structure of a member record FL2R stored in the member file FL2. The member record FL2R includes a membership ID, and the name, gender, age, zip code, transaction result data, coupon result data and rank of the member identified by the membership ID.

The name, gender, age and zip code are data items input at the time of the membership registration. The transaction result data is generated by summing up the merchandise sales data included in the receipt data. The coupon result data is generated by summing up the usage coupon data included in the receipt data. The rank is a preferential level of the member. For example, a rank is set for each customer according to the cumulative sales amount of the member. The cumulative sales amount may be calculated from the transaction result data.

Here, the member file FL2 is a second storage unit that stores attribute information of the customer in association with the corresponding customer identification information (membership ID) for each item indicating an attribute (gender, age, zip code or rank) of the customer.

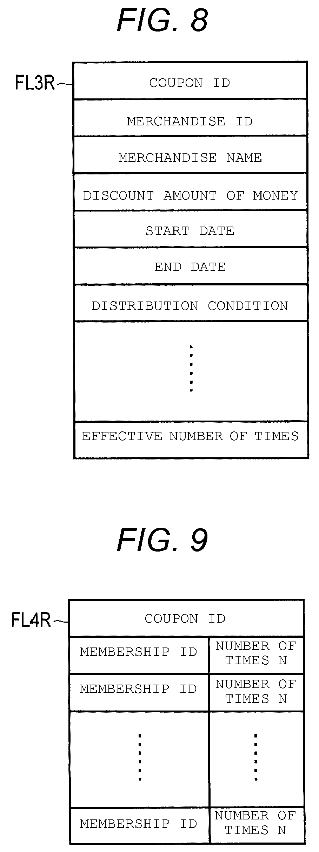

FIG. 8 is a schematic diagram showing the structure of a coupon record FL3R stored in the coupon file FL3. The coupon record FL3R includes a coupon ID, and the merchandise ID, merchandise name, discount amount of money, start date, end date, distribution condition and effective number of times which are related to the corresponding electronic coupon information identified by the coupon ID.

The merchandise ID identifies the merchandise to which a discount is applied according to the electronic coupon information. The merchandise name is a name of the merchandise identified by the corresponding merchandise ID. The discount amount of money is the amount of money discounted by the electronic coupon information. The start date and the end date are start and end dates of a period of time during which the electronic coupon information is used. The distribution condition is a condition for determining a group of members as a distribution target of the electronic coupon information. The group may be grouped according to an item, for example, gender, age, zip code or rank indicating the attribute of the customer among the data items constituting the member record FL2R. For example, when the distribution condition is "female and 20's", the female members from ages 20 to 29 are distribution targets of the electronic coupon information. Similarly, when the distribution condition is the "ranking number 1", the members having ranks set to "1" are distribution targets of the electronic coupon information. The effective number of times is an upper limit of number of times the member can use the electronic coupon. For example, if the electronic coupon information can be used only once per member, the effective number of times is "1". For example, if the electronic coupon information can be used twice per member, the effective number of times is "2".

Here, the coupon file FL3 is a third storage unit that stores the electronic coupon information corresponding to the coupon capable of being used in the transaction. The electronic coupon information is stored in association with setting information indicating the distribution condition of the electronic coupon information.

FIG. 9 is a schematic diagram showing the structure of a distribution management record FL4R stored in the distribution management file FL4. The distribution management record FL4R includes paired data of a coupon ID, a membership ID and an allowable number of times N. The membership ID identifies the member belonging to the group which is the distribution target of the electronic coupon information identified by the coupon ID. The allowable number of times N has the effective number of times of the electronic coupon information as an initial value, and is counted down whenever the electronic coupon information is used by the member identified by the corresponding membership ID. If the allowable number of times N is "0", the member is not able to use the electronic coupon information.

Here, the distribution management file FL4 is a fourth storage unit that stores the customer identification information (membership ID), which is the distribution target of the electronic coupon information identified by the coupon identification information, in association with the coupon identification information (coupon ID) for identifying the electronic coupon information.

### Operation of Electronic Receipt System

An operation before the member acquires the electronic coupon information from the center server 32 will now be described.

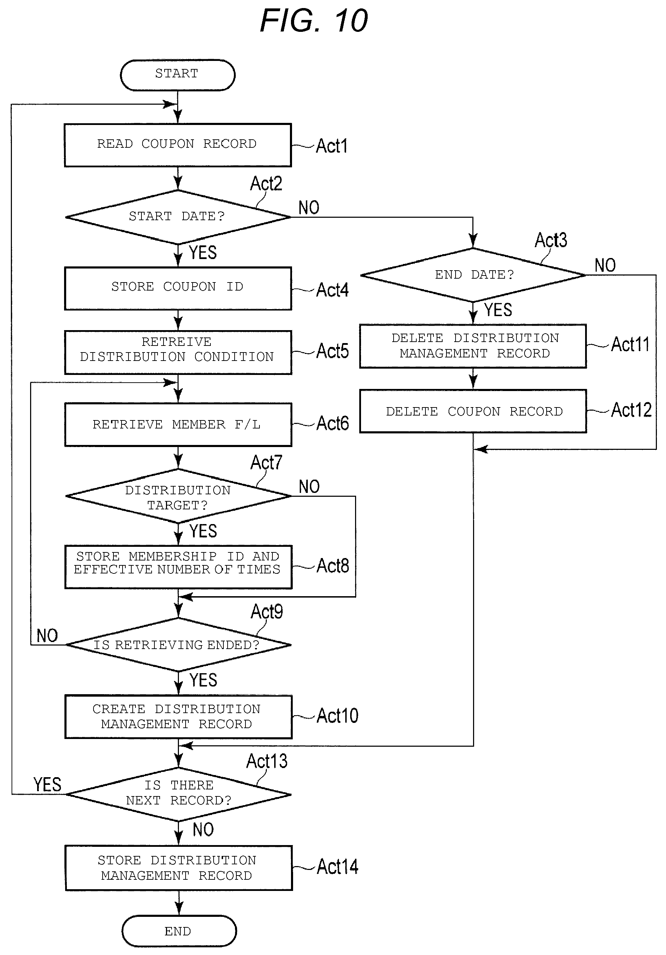

FIG. 10 is a flowchart showing an example sequence of operations of an update processing procedure performed by the processor 321 of the center server 32 whenever, for example, the date clocked by the clock 324 is switched to the next day. The update processing is performed in accordance with the electronic coupon management program P4. The processing content which is shown in FIG. 10 and is described below is an example, and various processing capable of achieving the same result may be appropriately used.

In Act 1, the processor 321 reads the coupon record FL3R from the coupon file FL3. Many coupon records FL3R related to the electronic coupon information provided by the manufacturer of the merchandise are stored in the coupon file FL3. The processor 321 performs the subsequent processing to the processing of Act2 on the read coupon record FL3R.

That is, in Act 2, the processor 321 checks whether or not the start date of the coupon record FL3R is identical with a date clocked by the clock 324. In Act 3, when the dates are not identical with each other (NO in Act 2), the processor 321 checks whether or not the end date of the coupon record FL3R is identical to the clocked date. If the dates are not identical with each other (NO in Act 3), the processor 321 proceeds to the processing of Act 13.

In Act 4, when the start date of the coupon record FL3R is identical with the date of the clock 324 (YES in Act 2), the processor 321 stores the coupon ID of the coupon record FL3R in the work area. In Act 5, the processor 321 reads the distribution condition of the coupon record FL3R.

In Act 6, the processor 321 retrieves the member file FL2. In Act 7, the processor 321 determines whether or not each of the member records FL2R satisfies the distribution condition. In Act 8, when the member record FL2R that satisfies the distribution condition is detected (YES in Act 7), the processor 321 stores paired data of the membership ID of the member record FL2R and the effective number of times of the coupon record FL3R in the work area. When the member record FL2R does not satisfy the distribution condition (NO in Act 7), the processor 321 does not store the paired data of the membership ID and the effective number of times in the work area.

In Act 9, the processor 321 determines whether or not the retrieving of the member file FL2 is ended. If the retrieval of the member file is not ended (YES in Act 9), the processor 321 returns to the processing of Act 6. That is, the processor 321 continues to retrieve the member file FL2. Whenever the member record FL2R that satisfies the distribution condition is detected, the processor 321 stores the paired data of the membership ID and the effective number of times in the work area.

In Act 10, when the retrieval of the member file is ended (NO in Act 9), the processor 321 creates the distribution management record FL4R. The distribution management record FL4R includes the coupon ID of the coupon record FL3R read from the coupon file FL3 in the processing of Act 1, and the paired data of the membership ID and the effective number of times created in the processing of Act 8. The created distribution management record FL4R is stored in the work area. Thereafter, the processor 321 proceeds to the processing of Act 13.

Meanwhile, in Act 11, when the end date of the coupon record FL3R is identical with the date of the clock 324 (YES in Act 3), the processor 321 retrieves the distribution management file FL4, and deletes the distribution management record FL4R that stores the coupon ID of the coupon record FL3R. In Act 12, the processor 321 deletes the coupon record FL3R from the coupon file FL3. Thereafter, the processor 321 proceeds to the processing of Act 13.

The "deletion" of the coupon record FL3R and the distribution management record FL4R does not necessarily mean only that the record is physically deleted from the file. For example the record may be invalidated by adding flag information indicating that the record is included in the "deletion" records.

In Act 13, the processor 321 determines whether or not there is a next coupon record FL3R. When there is a next coupon record FL3R in the coupon file FL3 (YES in Act 13), the processor 321 returns to the processing of Act 1. The processor 321 similarly performs the processing of Act 1 and the subsequent processing.

In Act 14, when there is not a next coupon record FL3R in the coupon file FL3 (NO in Act 13), the processor 321 stores the distribution management record FL4R stored in the work area in the distribution management file FL4. The update processing is thereby ended.

Here, the computer of the center server 32 having the processor 321 as the main component is a registration unit. That is, the computer collectively acquires the membership ID of the member which is stored in association with the attribute information satisfying the distribution condition from the member file FL2 whenever the coupon record FL3R having a start date identical with the date of the clock 324 is detected. The computer creates the distribution management record FL4R that stores the paired data of the membership ID and the allowable number of times N in association with the coupon ID, and registers the distribution management record FL4R in the distribution management file FL4. When the coupon record FL3R having an end date identical with the date of the clock 324 is detected, the computer deletes the coupon record FL3R, and deletes the distribution management record FL4R that stores the coupon ID of the coupon record FL3.

As a result, the distribution management records FL4R related to the electronic coupon information within a distribution period of time are collectively stored in the distribution management file FL4. The paired data of the membership ID of the member that satisfies the distribution condition of the electronic coupon information identified by the coupon ID and the allowable number of times N for the member is included in the distribution management record FL4R.

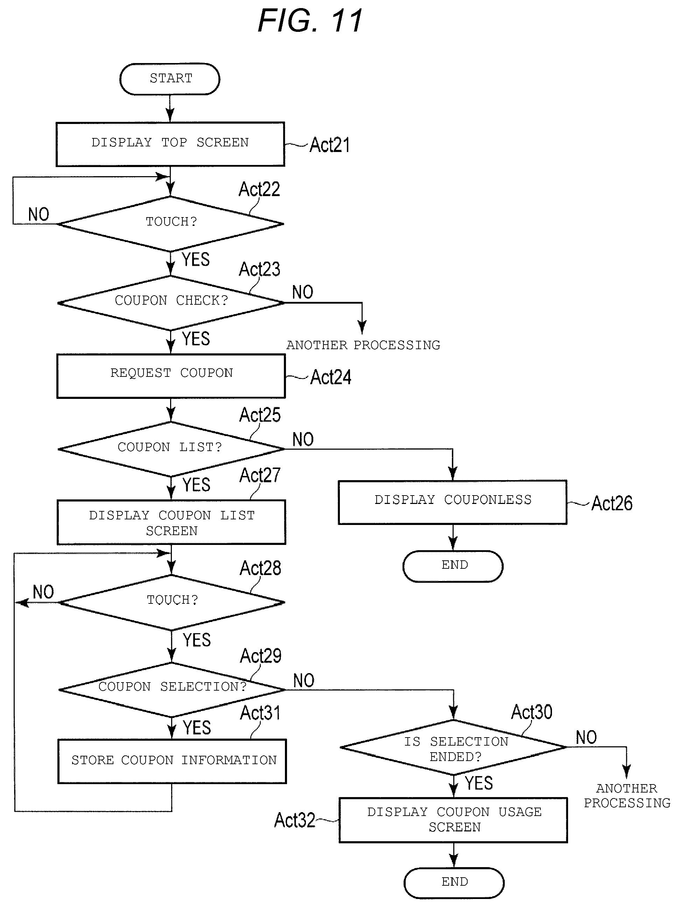

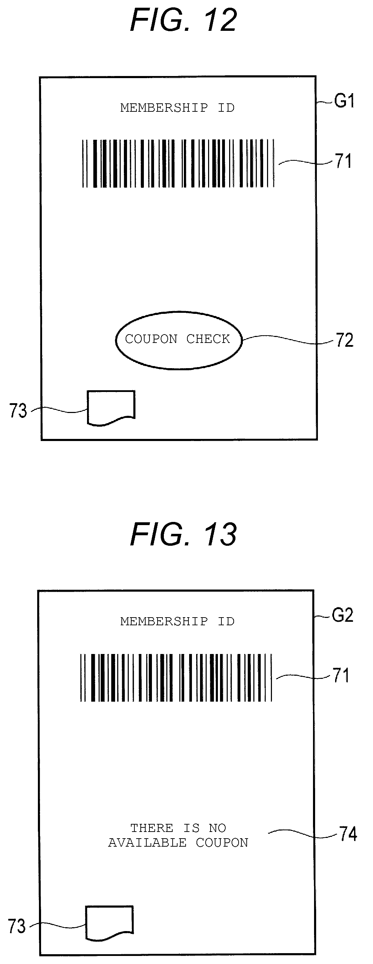

FIG. 11 is a flowchart showing an example sequence of operations for a coupon check processing procedure which is a part of the processing performed by the processor 61 of the information terminal 6. FIGS. 12 to 15 are schematic diagrams showing examples of various screens displayed on the touch panel 65 by performing the coupon check processing. The processor 61 performs the coupon check processing in accordance with the electronic receipt terminal program P1. The processing content which is shown in FIG. 11 and is described below is an example, and various processing capable of achieving the same result may be appropriately used.

An icon for starting the electronic receipt terminal program P1 is displayed on the touch panel 65 of the information terminal 6 in which the electronic receipt terminal program P1 is installed. If the member touches this icon, the electronic receipt terminal program P1 is started.

In Act 21, when the electronic receipt terminal program P1 is started, the processor 61 switches the screen of the touch panel 65 to a top screen G1 (see FIG. 12). As shown in FIG. 12, a barcode symbol 71 is displayed on the top screen G1. The barcode symbol 71 represents the membership ID stored in the electronic receipt management area W1. A coupon check icon 72 for instructing to check the electronic coupon information, and a receipt icon 73 for instructing to check the electronic receipt information are displayed on the top screen G1.

In Act 22, the processor 61 waits until the screen is touched in a state in which the top screen G1 is displayed. In Act 23, when it is detected that the screen is touched by a signal from the touch panel 65 (YES in Act 22), the processor 61 checks whether or not the coupon check icon 72 is touched. When a screen area other than the coupon check icon 72 is touched (NO in Act 23), the processor 61 performs processing in accordance with this touch position. For example, when the receipt icon 73 is touched, a receipt list screen is displayed on the touch panel 65. The receipt list screen includes simplified information such as the transaction date, store name and total amount of money of the electronic receipt information issued to the member as a list. When the member touches a desired simplified information display field, a transaction receipt image corresponding to the touched field is displayed on the touch panel 65.

In Act 24, when the coupon check icon 72 is touched (YES in Act 23), the processor 61 transmits a coupon request command, using the membership ID as a retrieval key, to the center server 32. That is, the processor 61 reads the membership ID from the electronic receipt management area W1 and then controls the wireless unit 66 such that the coupon request command including the membership ID is transmitted to the center server 32.

The wireless unit 66 wirelessly transmits the coupon request command using a communication address of the center server 32 as a communication destination address and a communication address of the information terminal 6 as a communication source address. The coupon request command includes the membership ID within the electronic receipt management area W1. The wirelessly transmitted coupon request command is received by the base station 5, and is transmitted to the center server 32 via the network 4.

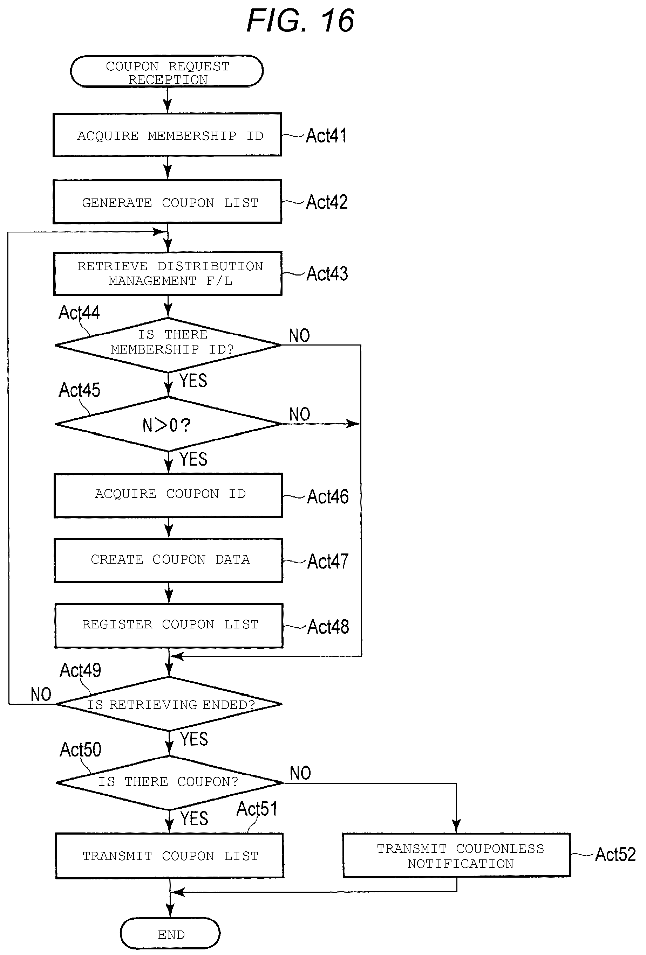

The processor 321 of the center server 32 that receives the coupon request command performs reception processing of the procedure shown in the flowchart of FIG. 16. This processing is performed in accordance with the electronic coupon management program P4. The processing content which is shown in FIG. 16 and is described below is an example, and various processing capable of achieving the same result may be appropriately used.

In Act 41, when the reception processing of the coupon request command is started, the processor 321 acquires the membership ID. As stated above, the coupon request command includes the membership ID corresponding to the member which is the user of the information terminal 6 as a transmission source of this command. The processor 321 acquires the membership ID from the coupon request command.

In Act 42, when the membership ID is acquired, the processor 321 generates a coupon list in the non-volatile memory area of the main memory 322. Subsequently, in Act 43, the processor 321 retrieves the distribution management file FL4. In Act 44, the processor 321 checks whether or not the acquired membership ID is included in each distribution management record FL4R. In Act 45, when the distribution management record FL4R including the membership ID is detected (YES in Act 44), the processor 321 checks whether or not the allowable number of times N corresponding to the membership ID is equal to or greater than "1".

In Act 46, when the allowable number of times N is equal to or greater than "1" (YES in Act 45), the processor 321 acquires the coupon ID from the distribution management record FL4R. In Act 47, the processor 321 reads the coupon record FL3R including the coupon file from the coupon file FL3, and creates the electronic coupon data by using the coupon ID of the coupon record FL3R, the merchandise ID, the merchandise name and the discount amount of money. In Act 48, the processor 321 registers the electronic coupon data in the coupon list. When the membership ID is not included in the distribution management record FL4R (NO in Act 43), or when the allowable number of times N is "0" (NO in Act 45), the processor 321 does not perform the respective processing of Act 46, Act 47 and Act 48.

In Act 49, the processor checks whether or not the retrieval of the distribution management file FL4 is ended. If the retrieval of the distribution management file is not ended (NO in Act 49), the processor 321 returns to the processing of Act 43. That is, the processor 321 continues to retrieve the distribution management file FL4. The processor 321 creates the electronic coupon data including the coupon ID of the distribution management record FL4R whenever the distribution management record FL4R, which includes the membership ID acquired from the coupon request command and has the corresponding allowable number of times N equal to or greater than "1", is detected. The processor 321 registers the electronic coupon data in the coupon list.

In Act 50, when the retrieving of the distribution management file FL4 is ended (YES in Act 49), the processor 321 checks whether or not the electronic coupon data is registered in the coupon list. In Act 51, when the electronic coupon data is registered (YES in Act 50), the processor 321 controls the communication interface 325 so that the coupon list data is transmitted to the information terminal 6 which is a transmission source of the coupon request command.

The communication interface 325 transmits the coupon list data using the communication address of the information terminal 6 which is the transmission source of the coupon request command as the transmission destination and the communication address of the center server 32 as the transmission source to the network 4. The coupon list data includes the electronic coupon data registered in the coupon list.

In Act 52, when the electronic coupon data is not registered in the coupon list (NO in Act 50), the processor 321 controls the communication interface 325 so that couponless notification data is transmitted to the same information terminal 6.

The communication interface 325 transmits the couponless notification data using the communication address of the information terminal 6 which is the transmission source of the coupon request command as the transmission destination and the communication address of the center server 32 as the transmission source to the network 4.

The coupon list data or the couponless notification data transmitted to the network 4 is wirelessly transmitted from the base station 5, and is received by the information terminal 6 having the communication address of the transmission destination.

Here, the computer of the center server 32 including the processor 321 as the main component functions as an electronic coupon distribution unit in cooperation with the communication interface 325. That is, in response to the reception of the electronic coupon request command including the membership ID, the computer controls the communication interface 315 such that the electronic coupon information identified by the coupon ID, which is stored in the distribution management file FL4 in association with the membership ID included in the command, is transmitted to the information terminal 6 which is the transmission source of the command. More specifically, the computer controls the communication interface 315 such that the electronic coupon information identified by the coupon ID, but excluding the coupon ID in which the used number of times calculated from the allowable number of times N exceeds the limit, is transmitted to the information terminal 6 which is the transmission source of the electronic coupon request command.

The description refers back to FIG. 11.

In Act 25, the processor 61 of the information terminal 6 that transmitted the coupon request command to the center server 32 waits for data transmitted from the center server 32. Here, in Act 26, when the couponless notification data is received through the wireless unit 66 (NO in Act 25), the processor 61 switches the screen of the touch panel 65 to a couponless notification screen G2 (see FIG. 13). As shown in FIG. 13, the barcode symbol 71 of the membership ID and a message 74 for reporting that there is no available electronic coupon information are displayed on the couponless notification screen G2. Accordingly, the member who touched the coupon check icon 72 can check that there is no electronic coupon information available at a present point of time from the message 74.

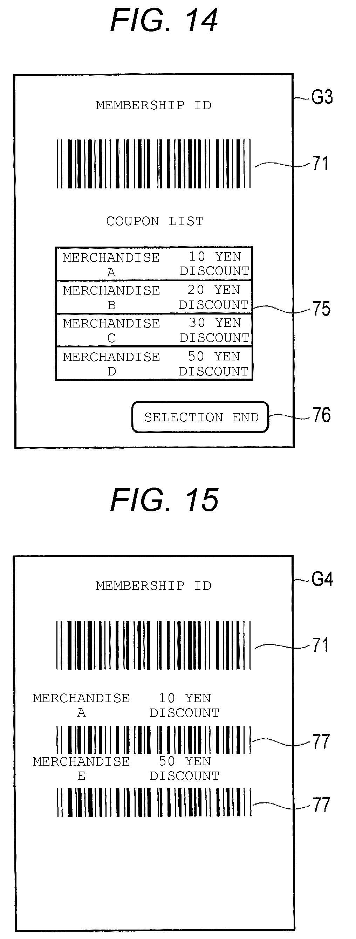

In Act 27, when the coupon list data is received from the center server 32 (YES in Act 25), the processor 61 switches the screen of the touch panel 65 to a coupon list screen G3 (see FIG. 14). As shown in FIG. 14, the barcode symbol 71 of the membership ID and a coupon list 75 are displayed on the coupon list screen G3. A selection end icon 76 for the member to give an instruction to end the selection of the electronic coupon information is also displayed on the coupon list screen G3. The coupon list 75 displays a list of electronic coupon data items included in the coupon list data. Specifically, a list of the name of merchandise for the coupon and the discount amount of money is displayed on the coupon list 75. Accordingly, the member who touches the coupon check icon 72 can check the merchandise as a target of the coupon available in the present point of time and the discount amount of money when this coupon is used from the coupon list 75.

As mentioned above, in the electronic receipt system 1, the distribution condition is set for each electronic coupon information. The electronic coupon information is distributed to only the member who satisfies this distribution condition. Accordingly, the members who receive the receipts as the electronic receipt information are grouped according to the distribution condition, and thus, the electronic coupon information can be distributed on a group basis.

Hereinafter, an operation when the member who acquires the electronic coupon information settles the transaction using this coupon will be described.

The member who checks the coupon list 75 searches for the electronic coupon information desired to be used in the retail store from the list 75. When particular electronic coupon information is desired to be used, the member touches the line of the coupon list 75 in which the merchandise name as the coupon target is displayed. In this case, when there are coupons of two or more electronic coupon information desired to be used, the member sequentially touches the lines. The member who ends the selection of the electronic coupon information touches the selection end icon 76.

In Act 28, the processor 61 waits until the screen is touched in a state in which the coupon list screen G3 is displayed. When it is detected that the screen is touched by a signal from the touch panel 65 (YES in Act 28), the processor 61 checks whether or not the line of the coupon list 75 is touched in Act 29, and checks whether or not the selection end icon 76 is touched in Act 30. When an area other than the coupon list 75 or the selection end icon 76 is touched (NO in Act 29 and No in Act 30), the processor 61 performs processing in accordance with this touch position.

In Act 31, when the line of the coupon list 75 is touched (YES in Act 29), the processor 61 stores the electronic coupon data (the coupon ID, the merchandise ID, the merchandise name and the discount amount of money) with the discount amount of money and merchandise name displayed in the touched line in the work area. Thereafter, the processor 61 returns to the processing of Act 28, and waits until the screen is touched again.

In Act 32, when the selection end icon 76 is touched (YES in Act 30), the processor 61 switches the screen of the touch panel 65 to a coupon usage screen G4 (see FIG. 15). As shown in FIG. 15, the barcode symbol 71 of the membership ID and a barcode 77 of the coupon ID are displayed on the coupon usage screen G4. The merchandise name and the discount amount of money associated with the barcode 77 are displayed. The barcode 77 represents the coupon ID included in the electronic coupon data stored in the work area. The merchandise name and the discount amount of money included in the same electronic coupon data are displayed in correlation with the barcode 77. Accordingly, the membership ID of the member and the coupon ID of the electronic coupon selected by this member are displayed as the barcode on the touch panel 65.

When the member touches the selection end icon 76 without selecting the electronic coupon information, since the electronic coupon data is not stored in the work area, the barcode 77 is not displayed on the coupon usage screen G4.

The member using the coupon of the electronic coupon information presents the coupon usage screen G4 to a person in charge of an accounting service. The person in charge of the accounting service who sees the coupon usage screen G4 initially scans the barcode of the membership ID displayed on the coupon usage screen G4 by means of the scanner 218 of the POS terminal 21. Subsequently, the person in charge of the accounting service scans the barcode 77 of the coupon ID displayed on the coupon usage screen G4, and also scans the barcode of the merchandise ID assigned to the sales merchandise. When the scanning is ended, the person in charge of the accounting service inputs the settlement key, and confirms the settlement of the payment transaction.

Here, the order of scanning the barcodes 77 of the coupon IDs and the barcodes of the merchandise IDs is not particularly limited. The barcodes of the merchandise IDs may be scanned after the barcodes 77 of the coupon IDs are collectively scanned. Alternatively, the barcodes 77 of the coupon IDs may be scanned after the barcodes of the merchandise IDs are collectively scanned. Alternatively, when the barcodes of the merchandise IDs are scanned, the person in charge of the accounting service may check whether or not there is an electronic coupon for the merchandise, and may additionally scan the barcode of the merchandise ID and the barcode 77 of the coupon ID when there is the electronic coupon.

The processor 211 of the POS terminal 21 can identify whether the scanned barcode is the barcode of the membership ID, the barcode 77 of the coupon ID, or the barcode of the merchandise ID by analyzing data of the scanned barcode using a known technology.

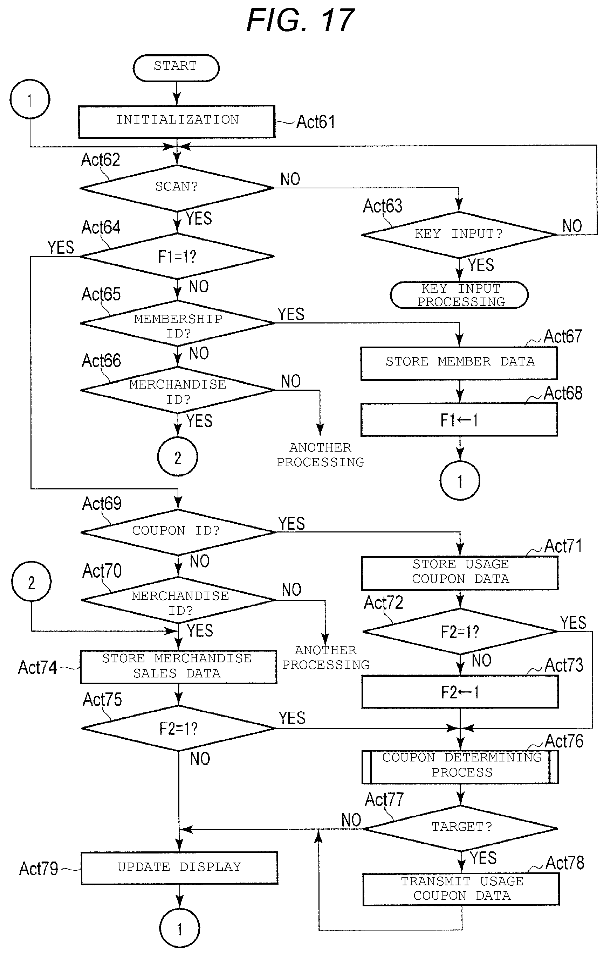

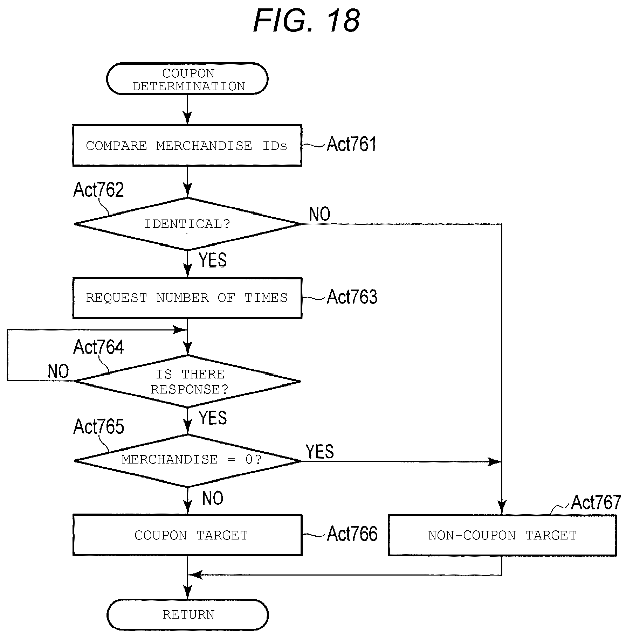

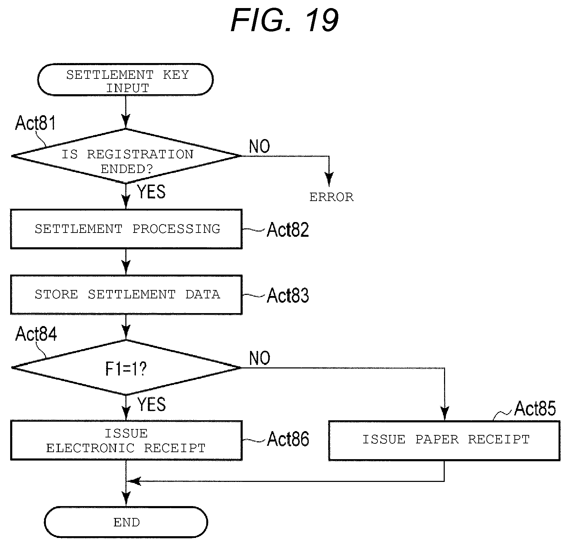

FIG. 17 is a flowchart showing an example sequence of operations for scan processing procedure performed by the processor 211 of the POS terminal 21. FIG. 18 is a flowchart that specifically shows an example sequence of operations for a coupon determination processing. FIG. 19 is a flowchart showing an example sequence of operations for a settlement key processing procedure performed by the processor 211 of the POS terminal 21. The processor 211 performs these processing in accordance with the electronic receipt issuing program P2. The processing content which is shown in FIGS. 17 to 19 and is described below is an example, and various processing capable of achieving the same result may be appropriately used.

In Act 61, when the electronic receipt issuing program P2 is started, the processor 211 performs initialization. Through the initialization, data items in a transaction buffer and a coupon buffer formed in the non-volatile memory area of the main memory 212 are cleared. The transaction buffer is an area where data related to the payment transaction with the member is temporarily stored. The coupon buffer is an area where data related to the electronic coupon information used by the member is temporarily stored. Through the initialization, a member flag F1 and a coupon flag F2 are set to be "0". The member flag F1 is 1-bit information set to be "1" when the payment transaction is with the member who receives the receipt as electronic receipt information. The coupon flag F2 is 1-bit information set to be "1" when the payment transaction with the member who uses the coupon of the electronic coupon information is performed. The member flag F1 and the coupon flag F2 are stored in, for example, the non-volatile memory area. A screen created based on the data of the transaction buffer is displayed on the display 216. Accordingly, the screen of the display 216 is switched to an initialization screen through the initialization.

In Act 62, when the initialization is ended, the processor 211 checks whether or not the scanning is performed. In Act 63, when the scanning is not performed (NO in Act 62), the processor 211 checks whether or not a key is input. When the key is not input (NO in Act 63), the processor 211 returns to the processing of Act 62. Accordingly, the processor 211 waits until the scanning is performed or the key is input through the processing of Act 62 and Act 63.

In Act 64, when the barcode is scanned by the scanner 218 (YES in Act 62), the processor 211 investigates the member flag F1. Here, in Act 65, when the member flag F1 is reset to be "0", the processor 211 checks whether or not the scanned barcode is the barcode of the membership ID. In Act 66, when the scanned barcode is not the barcode of the membership ID (NO in Act 65), the processor 211 checks whether or not the scanned barcode is the barcode of the merchandise ID. When the scanned barcode is not the barcode of the merchandise ID (NO in Act 66), the processor 211 performs processing in accordance with the kind of barcode.

In Act 67, when the scanned barcode is the barcode of the membership ID (YES in Act 65), the processor 211 stores member data related to the membership ID acquired by analyzing the barcode in the work area. The member data includes the membership ID, as well as the name, gender, age and rank stored in the member file FL2 in association with the membership ID. The data items such as the name, gender, age and rank may be acquired from the center server 32 whenever the barcode of the membership ID is scanned, or may be acquired from a local file by storing the local file of the member file FL2 in the store server 22 in advance.

In Act 68, the processor 211 sets the member flag F1 to be "1". Thereafter, the processor 211 returns to the processing of Act 62. Accordingly, when the next barcode is scanned (YES in Act 62), since the member flag F1 is set to be "1" (YES in Act 64), the processor 211 proceeds to the processing of Act 69. In Act 69, the processor 211 checks whether or not the scanned barcode is the barcode of the coupon ID. In Act 70, when the scanned barcode is not the barcode of the coupon ID (NO in Act 69), the processor 211 checks whether or not the scanned barcode is the barcode of the merchandise ID. When the scanned barcode is not the barcode of the merchandise ID (NO in Act 70), the processor 211 performs processing in accordance with the kind of barcode.

In Act 71, when the scanned barcode is the barcode of the coupon ID (YES in Act 69), the processor 211 stores usage coupon data related to the coupon ID acquired by analyzing the barcode in the coupon buffer. The usage coupon data includes a coupon ID, and the merchandise ID, merchandise name and discount amount of money set to the coupon buffer FL3 in association with the coupon ID. The data items such as the merchandise ID, merchandise name and discount amount of money may be acquired from the center server 32 whenever the barcode of the coupon ID is scanned, or may be acquired from a local file by storing the local file of the coupon file FL3 in advance in the store server 22.

In Act 72, the processor 211 investigates the coupon flag F2 after the usage coupon data is stored in the coupon buffer. Here, in Act 73, when the coupon flag F2 is set to be "0" (NO in Act 72), the processor 211 sets the coupon flag F2 to be set "1 ". When the coupon flag F2 is set to be "1" or the coupon flag F2 is already set to be "1" (YES in Act 72), the processor 211 proceeds to the processing of Act 76.

If the scanned barcode is the merchandise ID barcode of the merchandise ID (YES in Act 66 or Act 70), the processor 211 proceeds to the processing of Act 74. In Act 74, the processor 211 generates merchandise sales data from the merchandise ID acquired by analyzing the barcode. The merchandise sales data includes the merchandise ID, and the name (merchandise name), unit price, sales number, and sales amount of money of the merchandise identified by the merchandise ID. The data items of the merchandise name and the unit price are acquired from the merchandise master file. The sales number is normally "1", and is a multiplier when the multiplier is input immediately before the merchandise ID is scanned. The sales amount of money is calculated by multiplying the sales number to the price. The processor 211 stores the merchandise sales data in the transaction buffer.

Subsequently, the processor 211 investigates the coupon flag F2 in Act 75. Here, when the coupon flag F2 is set to be "0" (NO in Act 75), the processor 211 proceeds to the processing of Act 79. If the coupon flag F2 is set to be "1" (NO in Act 75), the processor 211 proceeds to the processing of Act 76.

In Act 76, the processor 211 performs the coupon determination processing of the procedure shown in the flowchart of FIG. 18. That is, the processor 211 compares the merchandise IDs in Act 761.

The scanned barcode may be the coupon ID and the coupon determination processing is performed after the processing of Act 71. Further, the scanned barcode may be the merchandise ID and the coupon determination processing is performed after the processing of Act 74. In the former case, the processor 211 compares the merchandise ID of the usage coupon data stored in the coupon buffer in the processing of Act 71 with the merchandise ID of the merchandise sales data already stored in the transaction buffer. In the latter case, the processor 211 compares the merchandise ID of the merchandise sales data stored in the transaction buffer in the processing of Act 74 with the merchandise ID of the usage coupon data already stored in the coupon buffer.

In Act 762, the processor 211 checks whether or not the merchandise ID of the usage coupon data and the merchandise ID of the merchandise sales data are identical. When the merchandise IDs are identical (YES in Act 762), the processor 211 transmits a number request command using the coupon ID and the membership ID as a retrieval key to the center server 32. That is, the processor 211 controls the communication interface 219 so that the number request command, which includes the coupon ID acquired from the usage coupon data including the merchandise ID identical in the comparison processing and the membership ID stored in the processing of Act 67, is transmitted to the center server 32.

In Act 763, the communication interface 219 transmits the number request command using the communication address of the center server 32 as the transmission destination address and the communication address of the POS terminal 21 as the transmission source address. The number request command includes the coupon ID acquired from the usage coupon data including the merchandise ID identical in the comparison processing and the membership ID stored in the processing of Act 67. The number request command is transmitted to the center server 32 from the router 23 via the network 4.

The processor 321 of the center server 32 that receives the number request command retrieves the distribution management file FL4. When the distribution management record FL4R including the coupon ID included in the number request command is detected, the processor 321 retrieves the paired data to which the membership ID included in the number request command is set, from the distribution management record FL4R. The processor 321 controls the communication interface 325 so that response data including the allowable number of times N of the paired data is transmitted to the POS terminal 21 as the number request command transmission source.

The communication interface 325 transmits the respond data using the communication address of the POS terminal 21 which is the transmission source of the number request command as the transmission destination and the communication address of the center server 32 as the transmission source to the network 4. The response data includes the allowable number of times N paired with the membership ID. The response data is received by the router 23, and is transmitted to the POS terminal 21 as the transmission source of the number request command through the LAN 24.

In Act 764, the processor 211 of the POS terminal 21 that transmits the number request command to the center server 32 waits for the respond data transmitted from the center server 32. In Act 765, when the respond data is received (YES in Act 764), the processor 211 determines whether the allowable number of times N included in the respond data is equal to "0", or is equal to or greater than "1". In Act 766, when the allowable number of times N is equal to or greater than "1" (NO in Act 765), the processor 211 stores status information indicating that the merchandise is a coupon target in the work area. In Act 767, when the allowable number of times N is equal to "0" (YES in Act 765), the processor 211 stores status information indicating that the merchandise is a non-coupon target in the work area. The coupon determination processing is thereby ended.

The description refers back to FIG. 17.

In Act 77, when the coupon determination processing is ended, the processor 211 checks the status information stored in the work area by the coupon determination processing. In Act 78, when the status information indicates that the merchandise is the coupon target (YES in Act 77), the processor 211 transmits the usage coupon data of which the merchandise ID is checked to be identical in the coupon determination processing from the coupon buffer to the transaction buffer. Thereafter, the processor 211 proceeds to a display update processing of Act 79. If the status information indicates that the merchandise is the non-coupon target (NO in Act 77), the processor 211 proceeds to the processing of Act 79 without performing the processing of Act 78.

In Act 79, the processor 211 updates the screen of the display 216 created on the data of the transaction buffer. Accordingly, when the merchandise sales data is stored in the transaction buffer in the processing of Act 74, the merchandise name, the unit price, the sales number and the sales amount of money constituting the merchandise sales data are displayed on the screen. When the usage coupon data is stored in the transaction buffer in the processing of Act 78, the merchandise name and the discount amount of money corresponding to the usage coupon data are displayed on the screen. The amount of money calculated by subtracting the discount amount of money of the usage coupon data from the sales amount of money of the merchandise sales data is displayed as the transaction amount of money.

After the screen of the display 216 is updated, the processor 211 returns to the processing of Act 62. Accordingly, when the barcode is scanned again, the processor 211 performs the processing of Act 69 and the subsequent processing again.

When any key of the keyboard 215 is input (YES in Act 63), the processor 211 performs processing in accordance with the input key. That is, when the input key is the settlement key, the processor 211 starts the processing of the procedure shown in the flowchart of FIG. 19.

In Act 81, the processor 211 initially checks whether or not the registration of the sales merchandise of the payment transaction is ended. That is, the processor 211 checks whether or not the merchandise sales data is stored in the transaction buffer. When the merchandise sales data is not stored in the transaction buffer (NO in Act 81), the processor 211 determines the input of the settlement key as a mistaken operation in a state in which the sales merchandise of the payment transaction is not registered. In this case, the processor 211 determines the input of the settlement key to be an error.

In Act 82, when the merchandise sales data is stored in the transaction buffer (YES in Act 81), the processor 211 performs settlement processing. In the settlement processing, the processor 211 generates settlement data including the total amount of money of the sales merchandise and the payment classification (cash payment or credit payment) and the payment amount of money of the total amount of money. In Act 83, the processor 211 stores the settlement data in the transaction buffer.

Subsequently, the processor 211 investigates the member flag F1 in Act 84. In Act 85, when the member flag F1 is reset to be "0", that is, when the payment transaction with the customer who is not the electronic receipt member is performed, the processor 211 performs control so that the paper receipt is issued. Specifically, the processor 211 generates receipt data as print data using the data stored in the transaction buffer, outputs the receipt data to the printer 217, which issues the paper receipt.

In Act 86, when the member flag F1 is set to be "1", that is, when the payment transaction with the electronic receipt member is performed, the processor 211 performs control so that the electronic receipt is issued. Specifically, the processor 211 generates the digitalized receipt data using the data stored in the transaction buffer, and controls the communication interface 219 so that the generated receipt data and the membership ID of the member data stored in the work area in the processing of Act 67 are transmitted to the center server 32.

The communication interface 219 transmits the receipt data using the communication address of the center server 32 as the communication transmission address and the communication address of the POS terminal 21 as the transmission source address. The receipt data includes the membership ID, the merchandise sales data and the usage coupon data. The receipt data is transmitted to the center server 32 from the router 23 via the network 4.

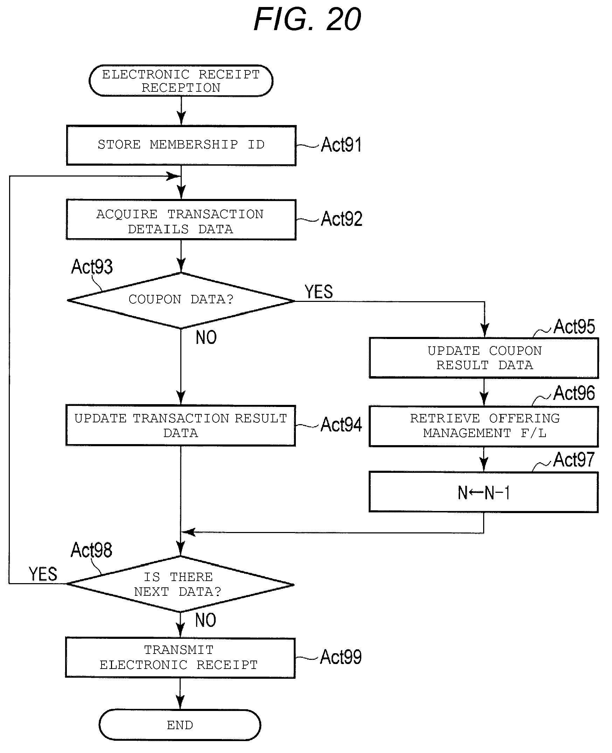

The processor 321 of the center server 32 that receives the receipt data performs the processing of the procedure shown in the flowchart of FIG. 20. The processing content which is shown in FIG. 20 and is described below is an example, and various processing capable of achieving the same result may be appropriately used.

In Act 91, the processor 321 acquires the membership ID from the receipt data. In Act 92, the processor 321 acquires transaction details data from the receipt data. The transaction details data is the merchandise sales data or the usage coupon data.

In Act 93, the processor 321 determines whether the transaction details data is the merchandise sales data or the usage coupon data. In Act 94, when the transaction details data is the merchandise sales data (NO in Act 93), the processor 321 updates the transaction result data of the member record FL2R including the membership ID acquired in the processing of Act 91.

In Act 95, when the transaction details data is the usage coupon data (YES in Act 93), the processor 321 updates the coupon result data of the member record FL2R including the membership ID acquired in the processing of Act 91. In Act 96, the processor 321 retrieves the distribution management file FL4 using the coupon ID of the usage coupon data and the membership ID acquired in the processing of Act 91 as the retrieval key. In Act 97, the processor 321 subtracts "1" from the allowable number of times N paired with the membership ID in the distribution management record FL4R in which the coupon ID and the retrieval key are identical.

In Act 98, when the processing of Act 94 or Act 97 is ended, the processor 321 checks whether or not there is the next transaction details data. When there is the next transaction details data (YES in Act 98), the processor 321 returns to the processing of Act 92, and similarly repeats the subsequent processing.

In Act 99, when there is not the next transaction details data (NO in Act 98), the processor 321 transmits the receipt data received from the POS terminal 21 to the electronic receipt server 31. The electronic receipt server 31 stores the receipt data in the receipt file FL1.

As mentioned above, in the electronic receipt system 1, the member uses the coupon of the electronic coupon information, and thus, the allowable number of times N of the electronic coupon information of the member is decreased. For example, the electronic coupon is not distributed to the member of the membership ID in which the allowable number of times is "0" even within the distribution period of time. Therefore, according to the electronic receipt system 1, it is possible to limit the number of times the member uses the coupon for each electronic coupon, and thus, it is possible to control the electronic coupon information such that the coupon is not distributed to the member who uses the electronic coupon the limited usage number of times or more.

Here, the computer of the center server 32 including the processor 321 as the main component is a reception unit that receives the electronic receipt information from the accounting device (POS terminal 21) that settles the transaction in cooperation with the communication interface 325. The computer is configured to function as an acquisition unit and an update unit. That is, the computer acquires the membership ID and the coupon result data which is the usage result data of the electronic coupon information from the electronic receipt information. When the coupon result data is acquired, the computer decreases the allowable number of times N stored with the membership ID in association with the coupon ID included in the coupon result data. That is, the computer updates the allowable number of times N such that the usage number of times is increased.

### Effect of Electronic Receipt System

In the electronic receipt system 1, the center server 32 includes the member file FL2, the coupon file FL3, and the distribution management file FL4. In the coupon file FL3, the coupon record FL3R using the setting information for the item indicating the attribute of the member (the user who conducts the membership registration for receiving the receipt as the electronic receipt information), which is stored in the member file FL2, as the distribution condition of the electronic coupon information, is stored.

The processor 321 of the center server 32 detects the membership ID of the member which is stored in association with the attribute information satisfying the distribution condition, in the member file FL2 for each electronic coupon information. The distribution management record FL4R that stores the membership ID detected for the electronic coupon information is created in association with the corresponding coupon ID of each electronic coupon information. The distribution management record FL4R is registered in the distribution management file FL4.

Accordingly, for example, in the center server 32, when the electronic coupon request command including the membership ID is received from the information terminal 6 used by the member, the processor 321 detects the distribution management record FL4R that stores the membership ID from the distribution management file FL4. The processor 321 transmits the electronic coupon information identified by the coupon ID of the distribution management record FL4R to the information terminal as the transmission source. The processor 321 performs such an operation, and thus, the electronic coupon information in which the attribute information of the member satisfies the distribution condition is selectively distributed to each member.

For example, the electronic coupon information of which the distribution condition is set to be "female and 20's" is distributed to female members from ages 20 to 29. The electronic coupon information is not distributed to male members nor to female members of ages other than 20's. Similarly, the electronic coupon information of which the distribution condition is set to be "ranking number 1" is distributed to the members of which the rank is set to be the first. The electronic coupon information is not distributed to the members of which the rank is set to be the second or less.

As stated above, according to the electronic receipt system 1, the members are grouped according to the distribution condition set for each electronic coupon information, and thus, the electronic coupon information can be distributed to the information terminal 6 of each member on a group basis.

The allowable number of times N correlated with the membership ID is stored in the distribution management record FL4R stored in the distribution management file FL4. The allowable number of times N is the effective number of times of which the initial value is set to the electronic coupon information, and is decreased by "1" whenever the member identified by the corresponding membership ID uses the coupon of the electronic coupon information identified by the coupon ID of the distribution management record FL4R. When the electronic coupon request command is received, even though the distribution management record FL4R that stores the membership ID included in this command is detected, the processor 321 of the center server 32 does not transmit the electronic coupon information identified by the coupon ID of the distribution management record FL4R to the information terminal as the transmission source of the request command when the allowable number of times of times N correlated to the membership ID is "0".

Accordingly, for example, it is possible to appropriately control the number of times the electronic coupon information is distributed such that the electronic coupon information is not distributed to the members who satisfy the distribution condition more than the effective number of times set for each electronic coupon information.

### Modification Example

In the embodiment, it has been described that the POS terminal 21 transmits the electronic receipt information generated in the payment transaction with the electronic receipt member to the center server 32 and the center server 32 transmits the electronic receipt information to the electronic receipt server 31 after the processing in the center server 32 is ended.

In this regard, the POS terminal 21 may transmit the electronic receipt information to the electronic receipt server 31, and the electronic receipt server 31 may store the electronic receipt information in the receipt file FL1 and may transmit the electronic receipt information to the center server 32. Alternatively, the POS terminal 21 may concurrently transmit the electronic receipt information to the electronic receipt server 31 and the center server 32.

In the embodiment, it has been described that the electronic receipt server 31 includes the receipt file FL1 and the center server 32 includes the member file FL2, the coupon file FL3 and the distribution management file FL4. Further, it has been described that the processor 321 of the center server 32 performs the information processing on the electronic coupon request command. In this regard, for example, the electronic receipt server 31 includes the receipt file FL1, the member file FL2 and the distribution management file FL4, and the center server 32 includes the coupon file FL3. The processor 311 of the electronic receipt server 31 may perform the information processing on the electronic coupon request command.

The server system 3 may not necessarily include the electronic receipt server 31 and the center server 32. One server device may have both the function of the electronic receipt server 31 and the function of the center server 32. Alternatively, the store server 22 constituting the POS system 2 may have the functions of the electronic receipt server 31 and the center server 32. In this case, the server system 3 may not be provided in the electronic receipt system 1.

In the embodiment, it has been described that the allowable number of times N is used as the information indicating the usage number of times of the electronic coupon information. The allowable number of times N has the initial value as the effective number of times set for each electronic coupon information, and is counted down whenever the coupon identified by the corresponding coupon ID is used. The information indicating the usage number of times is not limited to the allowable number of times N. For example, the information indicating the usage number of times may be implemented by a counter that increments the usage number of times. In this case, if the counted value exceeds the effective number of times, the electronic coupon information may be controlled such that the electronic coupon information is not distributed to the member of the membership ID constituting the paired data by being paired with the counted value.

In general, the program may be transferred to the server device (electronic receipt server 31 and the center server 32) in a state in which the program of the present embodiment is stored in the main memory. However, the embodiment is not limited to such an example, and a program independently transferred from the server device may be written in a writable storage device included in the server device in response to an operation of the user. The program may be transferred by being recorded in a removable recording medium or by performing communication via the network. Any type of recording medium may be used as long as the recording medium such as a CD-ROM or a memory card can store the program and can be read by the device. The function acquired by installing or downloading the program may be realized in cooperation with an operating system (OS) within the device.
While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. An electronic coupon management system comprising a server, the server (31) comprising:
a processor (311);
a storage device (312); and
a communication interface (315), wherein the processor is configured to control the storage device and the communication interface to perform the following functions:
store a plurality of electronic coupons, each electronic coupon corresponding to a coupon that can be used in a transaction, and including attribute information corresponding to target customer attributes,
store a plurality of customer identification records, each customer identification record including an identification of a customer and attribute information of the customer,
identify, for each electronic coupon, a group of one or more customers for which the corresponding attribute information matches the attribute information in the corresponding electronic coupon,
receive from a user terminal a request for one or more coupons, the request including customer identification of the user of the user terminal, and
transmit to the user terminal, in response to the request, one or more of the electronic coupons for which the attribute information stored in the customer identification record corresponding to the customer identification in the request matches the attribute information in the corresponding electronic coupon.

2. The electronic coupon management system according to claim 1, wherein the processor is further configured to control the storage device and the communication interface to perform the following function:
store a plurality of coupon usage records, each coupon usage record including the customer identification information corresponding to a customer who used the corresponding coupon in a transaction at least one time, and a total number of times the coupon has been used by the customer.

3. The electronic coupon management system according to claim 2, wherein one or more of the electronic coupons is not transmitted to the user terminal in response to the request when the total number of times the corresponding coupon has been used by the user exceeds the permitted number of times of usage.

4. The electronic coupon management system according to claim 1, wherein the processor is further configured to control the storage device and the communication interface to transmit, to the user terminal, GUI instructions that cause the user terminal to display a list of coupons that can be used in the transaction.

5. The electronic coupon management system according to claim 4, wherein the list of coupons that can be used in the transaction is based on the target customer attributes of each electronic coupon compared to the attribute information of each customer identification record.

6. The electronic coupon management system according to claim 1, wherein the GUI instructions cause the user terminal to:
display the list of coupons including an interface that allows the user terminal to accept a user input selecting an electronic coupon from the list, and
in response to the accepted user input, display a code that can be scanned to apply the selected electronic coupon to the transaction.

7. The electronic coupon management system according to claim 1, wherein the processor is further configured to control the storage device and the communication interface to:
store, in at least one of the plurality of electronic coupons, an end date of the electronic coupon; and
if a current date is the same as or later than the end date, delete the corresponding electronic coupon.

8. An electronic coupon managing method comprising the steps of:
storing a plurality of electronic coupons, each electronic coupon corresponding to a coupon that can be used in a transaction, and including attribute information corresponding to target customer attributes;
storing a plurality of customer identification records, each customer identification record including an identification of a customer and attribute information of the customer;
identifying, for each electronic coupon, a group of one or more customers for which the corresponding attribute information matches the attribute information in the corresponding electronic coupon;
receiving from a user terminal a request for one or more coupons, the request including customer identification of the user of the user terminal; and
transmitting to the user terminal, in response to the request, one or more of the electronic coupons for which the attribute information stored in the customer identification record corresponding to the customer identification in the request matches the attribute information in the corresponding electronic coupon.

9. The method according to claim 8, further comprising step of:
storing a plurality of coupon usage records, each coupon usage record including the customer identification corresponding to a customer who used the corresponding coupon in a transaction at least one time, and a total number of times the coupon has been used by the customer.

10. The method according to claim 9, wherein one or more of the electronic coupons are not transmitted to the user terminal in response to the request when the total number of times the corresponding coupon has been used by the user exceeds the permitted number of times of usage.

11. The method according to any one of claims 8 to 10, further comprising the step of:
transmitting, to the user terminal, GUI instructions that cause the user terminal to display a list of coupons that can be used in the transaction.

12. The method according to claim 11, wherein the list of coupons that can be used in the transaction is based on the target customer attributes of each electronic coupon compared to the attribute information of each customer identification record.

13. The method according to any one of claims 8 to 12, wherein the GUI instructions further cause the user terminal to perform the steps of:
displaying the list in an interface that allows the user terminal to accept a user input selecting an electronic coupon from the list; and
in response to the accepted user input, displaying a code that can be scanned to apply the selected electronic coupon to the transaction.

14. The method according to any one of claims 8 to 13, further comprising the steps of:
storing, in at least one of the plurality of electronic coupons, an end date of the electronic coupon; and
if a current date is the same as or later than the end date, deleting the corresponding electronic coupon.

15. A non-transitory computer readable storage medium containing instructions that cause a server to perform an electronic coupon managing method according to any one of claims 8 to 14.
